# EUROPEAN PATENT SPECIFICATION

(11) **EP 0 798 970 B1**
(45) Date of publication and mention of the grant of the patent: **13.11.2002**
(21) Application number: 95938308.4
(22) Date of filing: 29.11.1995
(51) Int. Cl.: A23L 1/10, A23L 1/164, A23L 1/168, A23L 1/172, A23L 1/18

(54) **WHOLEGRAIN FOOD PRODUCTS**
GETREIDEVOLLKORN NAHRUNGSMITTEL
PRODUITS ALIMENTAIRES A BASE DE GRAINS DE CEREALE COMPLETE

(30) Priority: 19.12.1994 AU PN017394
(43) Date of publication of application: 08.10.1997
(73) Proprietor: Byron Australia Pty Ltd., Rushcutters Bay, NSW 2011 (AU)
(72) Inventor: LEWIS, David, Adrian, Rushcutters Bay, NSW 2011 (AU); LEWIS, Victor, Marcus, Rushcutters Bay, NSW 2011 (AU)
(74) Representative: Wablat, Wolfgang, Dr.Dr.
(86) International application number: AU9500796
(87) International publication number: WO96019117

(56) References cited:
- EP-A- 0 338 239
- EP-A- 0 393 870
- EP-A- 0 537 477
- WO-A-93/05665
- US-A- 3 925 567
- US-A- 4 251 551
- US-A- 4 789 738
- US-A- 5 102 679
- US-A- 5 523 109

## Description

### FIELD OF THE INVENTION

Consumers have an increasing interest in foods containing whole grains in various shapes and forms. This is encouraged by nutritionists and other professional health advisors. There are good reasons for this, such as the higher vitamin, fibre and mineral content of wholegrains as compared to refined grain products (for example, flours, semolina and starches). In most foods, however, whole grains, either integral or in the form of a kibble or a whole grain flour, are added as part of the food, in admixture with other partly processed ingredients or with partly or fully refined carbohydrate ingredients. By "whole grains" is meant the whole of a grain or other starchy seed with the major part of the bran layer and germ remaining as part of the seed.

The present invention relates to food products prepared entirely from selected whole grains and other whole starchy seeds or subdivided selected whole grains and other whole starchy seeds (hereinafter referred to as wholegrains) with or without the addition of flavourants, colourants, minerals, nutritional supplements or visual garnishes and the like, and processes for producing the same. More particularly, the present invention relates to dry tender crispy foods having a unique texture and aspect, these foods being suitable for uses such as snack foods, crisp-bread, breakfast cereals and confectionery according to the composition and method of processing selected. The food products of the present invention comprise components as described above formed into pieces of suitable size, shape and weight and thus no longer having the identity of individual single wholegrains or seeds from which they are derived. In their basic form the foods are very low in fat content, containing only the fat naturally present in the wholegrains used.

### REVIEW OF BACKGROUND ART

United States Patent 5,100,686 describes the use of dent corn to make a snack food. The process requires first the production of a masa from the dent corn with the optional addition of 2% to 15% of pregelatinized lightly modified waxy maize starch or a pregelatinized amioca starch. The optional addition of the starch was to increase the degree of expansion when the product was fried. However, it was indicated that if a larger amount of starch were added a less preferred product resulted.

United States Patent 4,806,377 similarly first produced a wet masa from corn, using waxy corn, with the optional blending in of a wet masa made from non-waxy dent corn. The process of preparing a masa which is required for these foods comprises a wet process involving aqueous cooking of the corn in lime-water, cooling, soaking (for example, twelve to sixteen hours) removing the corn from the lime-water, optional removal of the pericarp and grinding in a mill to produce the said masa having a moisture content of from 40% to 65%. Masa of this composition, being perishable, must be used promptly. Alternately, it must be dried for future use.

There is considerable literature involving the use of waxy or natural starches and grits in the manufacture of dry expanded snack food products none of which is relevant to the preparation of dry formed foods from wholegrains. United States Patent 5,132,133 described production of wholegrain snacks where a selection of wholegrain ingredients (predominantly) wheat is micronized, partially gelatinized, extruded and formed, then crisped by various methods to produce a fried snack of 20% or less fat content. Whereas 4,806,377 uses a wet corn masa made from waxy maize, the grains of 5,132,133 are not waxy grains and comprise a minimum of 30% of the final snack food.

EP 0 338 239 discloses a method for producing waxy maize corn flour - US 3 925 567 describes products comprising waxy corn starch and a cereal flour - US 4 251 551 describes a puffable dough containing pregelatinised waxy maize starch and corn meal.

The above references, as well as other literature examined, do not describe foods derived substantially from wholegrains which are used directly in the production of said foods without elaborate and time-consuming pretreatments.

It is one object of the present invention to offer novel foods, such as dry snacks, confectionery ingredients, crisp-breads or ready-to-eat breakfast cereals, comprising a very high proportion of wholegrains.

A further object of the present invention is to offer novel foods as referred to above wherein there is incorporated into the food a significant proportion of one or more wholegrains of a waxy character, with consequent novel effects.

Another object of the present invention is to offer novel foods as referred to above having a unique texture, structure, degree of expansion, tenderness and aspect.

A yet further object of the present invention is to provide a process for the making of the novel foods described above.

These and other aims of the invention will be demonstrated by the following description.

### SUMMARY OF THE INVENTION

The invention herein described comprises a cooked food product which may take various forms such as dry very low fat snack foods, crisp-breads, ready-to-eat cereals, confectionery ingredients and the like, comprising a high proportion of wholegrains, of which a substantial proportion comprises wholegrains of a waxy character, said wholegrains not requiring elaborate, time-consuming and cost incurring pretreatment. The cooked wholegrain food product comprises 20% to 100% waxy grains, and has a light expanded texture and aspect.

In accordance with a preferred aspect of the invention there is provided a process for producing a wholegrain food product which process comprises cooking one or more wholegrains comprising 20% to 100% waxy grains in the presence of moisture so as to gelatinize the grains, forming the cooked material into a dough of suitable size and shape for use as a food product, drying the material to about 4% to 25% water content, and thereafter expanding the product by heating.

### DETAILED DESCRIPTION OF THE INVENTION

In the present invention, a range of cooked food products is processed from selected wholegrains either whole or subdivided (for example, kibbled, gristed, pulverized or otherwise comminuted) using either a single wholegrain or, preferably, mixtures of wholegrains, the wholegrain composition including at least one waxy wholegrain. For convenience of description the term "wholegrains" is used herein to refer to whole or subdivided wholegrains. The proportion of waxy or waxy-like wholegrains to non-waxy wholegrains in the mix is determined by the texture and tenderness desired in the finished product. Waxy grains are special strains of starchy seeds wherein the proportion of amylopectin starch is very high and the proportion of amylose starch is much lower than normal. It is common to define a waxy grain as one in which the percentage of amylose starch in the grain is less than 10% of the weight of the grain. However, many waxy seeds (also called glutinous seeds) contain an amount of amylose much less than 10%.

A number of wholegrains which are available in waxy form. These include barley, milo, maize and rice. Given advances in plant technology there is every likelihood that waxy varieties of other wholegrains such as rye and wheat will be bred with the waxy characteristic. Non-waxy rice varieties, especially medium and short grain varieties may have a partially waxy-like character because of the lower levels of amylose they contain as compared to other non-waxy wholegrains. Some of the waxy and non-waxy grains which may be employed in this invention include barley, milo (sorghum), maize, rice, rye and wheat.

It has been found that use of about 20% to 100% of one or more waxy wholegrains will contribute the unique character of tenderness, lightness, expanded texture and aspect, the proportion of waxy wholegrain used being selected depending on the nature of the other non-waxy wholegrains used as well as the desired eating quality of the finished food. The above percentage range refers to the percentage of the total grains content not including other flavoring or supplementary ingredients.

It has further been found that each type of waxy wholegrain will contribute a unique textural and tenderness quality, as well as distinctive flavour.

Hence, by judicious selection of waxy wholegrain components and of non-waxy wholegrain components, a range of flavours, textures, degrees of lightness or expanded character may be achieved to suit various uses or tastes. Because of this versatility, the products of the invention can find many different uses such as but not limited to, for example:
- snack foods which are free from any added fats other than the fats contained in the wholegrains,
- confectionery ingredients offering crispy components of varied bulk density, tenderness flavour, shape and size,
- crisp-bread-like foods which again may be varied in hardness or tenderness and in degree of frangibility in accordance with consumer needs, and
- breakfast cereals of various shapes, piece sizes, flavours and nutritional balance.

The food products of this invention utilize wholegrains, with the bran, germ and other nutritive components present in their natural balance, each wholegrain being used with little or no pre-preparation treatments prior to use. However, it may sometimes be desirable to remove small proportions of outer bran from some of the wholeseeds used as ingredients without departing from the spirit of the invention.

Additional edible ingredients may be incorporated into the described food products, such as water, sugars, salt, flavourants, nutritional supplements, garnishes, seasonings and spices, minerals, functional ingredients, vitamins and other conventional food ingredients as are well known to those skilled in the art.

The selected balance of wholegrains is mixed with moisture and optional edible ingredients and cooked using suitable equipment so as to gelatinize the grains. The wholegrains may be integral, or subdivided to a selected extent, such as kibbled, pulverized or otherwise comminuted. Along with the moisture and wholegrains other edible ingredients may be added as described above.

Gelatinization of the starch in or derived from the wholegrains results from absorption of the added moisture during the cooking process. Gelatinization is readily visually observable and occurs when starch loses its opacity and becomes translucent. The extent to which starch may be cooked to achieve gelatinization will vary depending on the particular wholegrain or wholegrains being processed, whether the grains are integral or are subdivided, such as kibbled gristed, pulverized or the like, and the particular cooking process and conditions utilized. As mentioned above, gelatinization is readily visually observable and thus can be easily determined. Preferred cooking times are generally determined empirically based on product performance, that is, where the gelatinized grains are formed into a dough of suitable size and shape for use as a food product, dried to about 4 to 25% water content, followed by rapid expansion such as by baking. A preferred extent of cooking is that which provides at the completion of the process an expanded product which is suitable for use as a food product as described herein.

In general, gelatinization of waxy grains is achieved more rapidly than gelatinization of non-waxy grains. As a consequence, the extent of heating required for gelatinization of a mixed sample of wholegrains will vary depending on the proportion of waxy wholegrains to non-waxy wholegrains.

A wide range of cooking equipment is suitable for achieving the desired result, such as commercial cooking equipment well known to persons skilled in the art. For example, the food may be cooked in a rotating cooker in an atmosphere of live steam under pressure at a temperature and for a period of time required to achieve gelatinization of the wholegrains. In another example the food may be cooked in an extruder-cooker with moisture being added in the premix and/or at a suitable stage during the passage of the food through the extruder.

Irrespective of the method of cooking, the cooked wholegrains emerge having absorbed the added moisture and other ingredients. If an extruder cooker is used the food should exit from the equipment in an unexpanded moist gelatinized condition. It can be delivered through a dieplate whereby it is formed into strands or ropes of convenient dimension whereafter it is cut, slit or otherwise made into dough pieces of suitable size or weight for use as a food product. Alternately the dieplate can produce flat ribbons of suitable shapes either at the dieface or as a separate step. Using such cooking apparatus, cooking and dough formation are an integrated step.

If the wholegrains and other ingredients are cooked such that the wholegrains are in integral whole form, for example, in a rotary cooker, the grains will emerge as more or less separate entities. While still hot they are formed into a cohesive mass or body, for example by mincing or otherwise comminuting and forcing the cohesive food through a die to produce strands, ropes or ribbons of suitable diameter or shape for use as a food product. If necessary, this process may be repeated in order to achieve the degree of homogeneity as may be required in the final product.

In any event the resulting final dough which has been cut slit or otherwise reduced to suitably sized pieces may be flattened, for example by passing between the rolls of a roller mill or dough-break to produce individual food pieces of suitable thickness. Alternately, the strands or ropes of dough may be rolled out to form a sheet from which suitably sized and shaped food pieces are cut or stamped, with any rework being reshaped and utilized in the aforesaid manner.

Other methods well known in the food processing art may also be used to produce pieces of dough of suitable size and shape.

The suitably shaped dough pieces are dried to a moisture content of from about 4% to 25%, more especially about 9% to 15% moisture by methods well known in the art, such as by passing them through a warm air dryer, for example on a continuous belt dryer. It is important that the pieces are dried without sticking to each other. When drying has been completed it is advantageous to hold the half-material for a day or more to allow the contained moisture to equilibrate. Acceleration of equilibration can be achieved by storage in a closed space at a moderate temperature, for example, 40°C to 50°C for two or three hours. If storage of the material is to be for an extended period it will be necessary to ensure a moisture content below about 14% so as to avoid microbiological spoilage of the food.

To produce the finished product, the material is heated, preferably rapidly, resulting in considerable expansion and concomitant loss of moisture. Heating may be achieved by methods well known in the art such as fluidized heating in rapidly moving air, for example, at a temperature of about 180°C to 240°C until full expansion is achieved and the product is adequately reduced in moisture content. Alternately the pieces of material may be subjected to rapid heating by means of microwave energy, near infra-red energy and the like, preferably in conjunction with a suitable degree of ventilation. A further alternative is to induce rapid heating by frying which, however will produce a final product of higher fat content than by other methods referred to. A further option is to bake the dough, for example, in a fan or other air-forced oven. In any event, after heating has induced the degree of expansion and loss of moisture required the final product is cooled. In some cases it may be necessary to further dry the expanded product to lower the moisture content even further to achieve a high degree of crispness. This can be done, for example, by bin drying at a moderate temperature, for example, 50°C to 70°C.

The degree of expansion achieved will vary depending on the mix of wholegrains chosen, in particular the proportion and type of waxy wholegrains incorporated. In any event the character of the porous expanded product is unique, being of very fine texture, rather like a fine textured biscuit (cookie). The product also generally exhibits an attractive surface sheen at the surface of the food piece. The very fine cellular texture gives the food piece a surprising degree of integral strength resulting in excellent handling properties without breakage.

By contrast, a breakfast cereal flake is quite fragile and typically is not homogeneously cellular but rather is of a blistered aspect. The same is true of traditional crisped rice cereals and other breakfast cereal products. As a consequence, during handling the surface blisters rupture resulting in less attractive appearance and the presence of dust at the bottom of the package.

In comparison to extruded snack foods the products of the present invention possess a much finer cellular structure and have a marked lesser tendency to absorb moisture from the air after a package is opened.

In comparison to crisp-breads, again the very fine cellular character provides a surprising degree of integral strength during handling in association with a very tender texture on eating. By contrast crisp-breads have a coarser cellular structure and a harder texture on eating.

For use in confectionery products the fine cellular texture and smooth glazed homogeneous surface results in non-absorption of matrix bonding materials such as syrups, chocolate and the like and consequent lightness and economy.

The products of the invention, after the final heating and cooling step may be coated or garnished with a variety of other food materials in accordance with their destined usage. Thus a breakfast cereal piece may be further sugar frosted or coated with selected flavourants etc. A snack food either having a sweet base or a salty base, may be coated with supplementary sweeteners and flavourings or with salt and savoury flavours, using either a controlled quantity of oil or fat or a gum or starch system to achieve adhesion of the coating. If a fat or oil is used, the food will still be of very low fat content, for example, 5% to 10% as compared to the fat content of common snack foods such as corn chips (about 30%) and potato chips (35% to 40%).

Of course a particular advantage of the present invention is the fact that it delivers to the consumer in a range of attractive food forms a selection of products rich in the natural ingredients of wholegrains. What is more, a single industrial installation using readily available equipment can produce all of the products described simply by judicious selection of the wholegrains and other ingredients and of the operating parameters of the unit operations.

Furthermore, from the foregoing, it will be seen that the present invention in its various aspects has a number of additional advantages including:
- bypassing the expensive and time-consuming step of producing a high-moisture (up to 65%) masa,
- avoiding the use of chemicals (calcium hydroxide) in the grain treatment,
- avoiding the expensive use of refined starches including even more expensive pregelatinized modified starches as ingredients,
- using low-cost natural grains as the predominant ingredients in the products,
- providing a process which involves a relatively short period of actual processing time,
- the production of a range of products which are free of any added fat as a consequence of the basic process, and
- provision of wholegrain foods which are minimally processed with the nutritional advantages thereof.

This invention will now be described with reference to the following non-limiting examples.

### EXAMPLE 1

### Crispbread-type product

Whole-grain corn of the waxy type and whole-grain rye were mixed in the proportion of 3 parts to 2 parts by weight, then pulverized by passing through a hammer mill fitted with a 2 mm screen. Water was added to give a moisture content of 33% and salt was also added to give a concentration of 1% of the dry grain used. After mixing to uniformity, the damp meal so produced was cooked in live steam at 126°C for forty minutes. The cooked dough was formed into a sheet of 1.2 mm thickness, then cut into rectangles 40 mm x 90 mm, dried to about 12% moisture at 75°C and held in a sealed container twenty four hours to allow tempering. The dried pieces were then placed in a fluidizing stream of air at 210°C for forty five seconds, then cooled.

The crispbread was uniformly expanded to a thickness of 3 mm to 4 mm and comprised a very finely porous internal texture with a glazed surface. The eating quality was judged excellent being very dry and crispy but extremely tender. The crispbread had surprising integral strength in relation to its very tender eating quality.

Some of the dry pieces were placed in a microwave oven and subject to high heat until well expanded and dry. Similar texture and tenderness resulted from microwave - induced heating as with fluidizing air at an elevated temperature.

Some of the dry pieces were fried in a deep-fat fryer in oil at 190°C to 195°C. The food expanded rapidly. On cooling, a very delicious expanded tender food resulted. However, there was an increase in fat content as a consequence of the frying process. For many consumers this is not acceptable, but for some it would be quite acceptable.

### EXAMPLE 2

### Breakfast cereal product

Whole-grain waxy barley from which the hull had been removed and brown medium-grain rice were mixed in equal parts by weight. Water was added to take the moisture content to 30% along with sugar, honey, malt extract and salt, added at 6, 4, 6 and 1.5 parts per 100 parts of the dry grains. This mixture was cooked in live steam with agitation at 126°C for forty eight minutes. The cooked grains, substantially separate, were fed while hot through a mincer fitted with plate with 3 mm holes. The minced cooked grains were then formed into strands by passing through an extruder fitted with a die with holes 8.5 mm in diameter, the strands being cut to about 10 mm long at the die face. These pellets of dough were flattened by passing between smooth rolls set 0.5 mm apart, then dried to about 12% moisture content at 55°C. The dried unexpanded flakes were heated in fluidizing air at 215°C for thirty seconds, then cooled.

The final product had a flake form with uniform expansion throughout the flake, giving a flake thickness of 1.5 mm to 2 mm, with a crispy and very tender eating texture. When consumed with cold milk as a ready-to-eat breakfast cereal the food was of attractive flavour and texture, the crispness lasting very well in the milk without becoming soggy.

By producing dried unexpanded pieces of smaller size, either by producing smaller pellets or by breaking large dried unexpanded pieces into smaller pieces of suitable size, then expanding the small pieces, a product resulted which was mildly sweetened and was judged ideal for use in confectionery products such as chocolate bars, granola bars (muesli bars) and the like.

### EXAMPLE 3

### Snack Food Product

Whole-grain waxy milo (sorghum), brown medium-grain rice and wheat (61.5, 24 and 10 parts respectively by weight) were pulverized as in Example 1, then combined with 30 parts of water 3.5 of sugar and 1 part of salt by weight, and mixed to a uniform damp meal. The meal was cooked in live steam at 131°C for forty minutes. The cooked dough was formed into a rope or strand about 10 mm in diameter, cut into pieces about 10 mm to 12 mm long, flattened by passing between smooth rolls between which the gap was 0.5 mm, dried to 10.5% moisture in air at 80°C, tempered as in Example 1, then expanded by fluidizing the flattened pieces in air at 220°C for forty seconds. The cooled snack food was sprayed with 5% by weight of oil and then tumbled with 1% by weight of powdered salt. The resultant product was a uniformly and finely expanded flat snack food about 2 mm thick, very tender and ideal for eating out-of-hand. The product represented a very low fat snack food containing only 5% of added fat.

Optionally a food with no added fat could be produced by using a spray of dissolved starch to give adherence of salt or other flavourants to the product, followed by a brief drying step.

By the above described methods snack foods of various compositions may be produced including both sweet-type and savoury-type products with either no added fat or oil or with low but controlled addition of fat or oil according to market requirements.

Acceptable products of great variety may be produced from a selected mixture of wholegrains comprising the various proportions of one or more waxy wholegrains. A great variety of flavours, shapes and textural qualities can be produced to provide wholegrain foods having a very high content of nutritionally desirable unrefined wholegrains of many types.

## Claims

1. A process for preparing a wholegrain food product which comprises:
(a) cooking one or more different wholegrains comprising 20% (w/w) to 100% (w/w) waxy grains in the presence of moisture so as to gelatinize the grains;
(b) forming the gelatinized grains into a dough of a size, shape and weight suitable for use as a food product;
(c) drying the material to a water content from 4% (w/w) to 25% (w/w); and
(d) rapidly expanding the product by the application of heat.

2. A process according to claim 1 wherein the wholegrains are cooked as individual grains in integral form.

3. A process according to claim 1 wherein the wholegrains are subdivided prior to cooking.

4. A process according to claim 1 wherein the wholegrains are cooked in the presence of one or more edible sugars, salts, minerals, nutritional supplements, flavourings and garnishes.

5. A process according to claim 1 wherein the cooking of step (a) and the dough formation of step (b) are combined in a single integrated step.

6. A process according to claim 5 wherein the wholegrains are cooked in an extruder cooker.

7. A process according to claim 1 wherein the gelatinized wholegrains of step (b) are minced or otherwise comminuted to form a dough which is formed into shaped dough pieces.

8. A process according to claim 1 wherein the product of step (d) substantially comprises wholegrains.

9. A process according to claim 1 wherein the material of step (b) is dried to a moisture content from 9% (w/w) to 15 % (w/w).

10. A process according to claim 1 wherein the material of step (d) is heated in rapidly moving air by microwave energy, infra-red radiation, or frying.

11. A process according to claim 1 wherein the food product is a porous expanded product.

12. A process according to claim 1 wherein the wholegrains are selected from the group consisting of maize, barley, sorghum, rye, wheat and rice.

13. A process according to claim 1 wherein a mixture of wholegrains is used.

14. A wholegrain food product produced by a process which comprises:
(a) cooking wholegrains comprising 20% (w/w) to 100% (w/w) waxy grains in the presence of moisture so as to gelatinize the grains;
(b) forming the gelatinized grains into a dough of size, shape and weight suitable for use as a food product;
(c) drying the material from 4% (w/w) to 25% (w/w) water content; and
(d) rapidly expanding the product by the application of heat.

15. A product according to claim 14 wherein the wholegrains are cooked as individual grains in integral form.

16. A product according to claim 14 wherein the wholegrains are subdivided prior to cooking.

17. A product according to claim 14 wherein the wholegrains are cooked in the presence of one or more edible sugars, salts, minerals, nutritional supplements, flavourings and garnishes.

18. A product according to claim 14 wherein the cooking of step (a) and the dough formation of step (b) are combined in a single integrated step.

19. A product according to claim 18 wherein the wholegrains are cooked in an extruder cooker.

20. A product according to claim 14 wherein the gelatinized wholegrains of step (b) are minced or otherwise comminuted to form a dough which is formed into shaped dough pieces.

21. A product according to claim 14 wherein the product of step (d) substantially comprises wholegrains.

22. A product according to claim 14 wherein the material of step (b) is dried to a moisture content from 9% (w/w) to 15% (w/w).

23. A product according to claim 15 wherein the material of step (d) is heated in rapidly moving air by microwave energy, infra-red radiation, or frying.

24. A product according to claim 14 wherein the food product is a porous expanded product.

25. A product according to claim 14 wherein the wholegrains are selected from the group consisting of maize, barley, sorghum, rye, wheat and rice.

26. A product according to claim 14 wherein a mixture of wholegrains is used.

## Patentansprüche

1. Verfahren zur Herstellung eines Getreidevollkorn-Nahrungsmittels, das
(a) das Kochen einer oder mehrerer verschiedener Vollkörner mit 20% (Gew/Gew) bis 100% (Gew/Gew) wachsartigen Körnern in Gegenwart von Feuchtigkeit zum Gelatinieren der Körner,
(b) das Formen der gelatinierten Körner zu einem Teig einer Größe, einer Form und eines Gewichts, geeignet zur Verwendung als Nahrungsmittel,
(c) die Trocknung des Materials auf einen Wassergehalt von 4% (Gew/Gew) bis 25% (Gew/Gew), und
(d) die schnelle Ausdehnung des Produkts durch Anwendung von Hitze
umfasst.

2. Verfahren nach Anspruch 1, worin die Vollkörner als einzelne Körner in ganzer Form gekocht werden.

3. Verfahren nach Anspruch 1, worin die Vollkörner vor dem Kochen unterteilt werden.

4. Verfahren nach Anspruch 1, worin die Vollkörner in Gegenwart eines oder mehrerer essbarer Zucker, Salze, Mineralien, Nahrungsergänzungsmittel, Aromastoffe und Garnierungen gekocht werden.

5. Verfahren nach Anspruch 1, worin das Kochen aus Schritt (a) und die Teigformung aus Schritt (b) zu einem einzigen integrierten Schritt kombiniert werden.

6. Verfahren nach Anspruch 5, worin die Vollkörner in einem Extrusionskocher gekocht werden.

7. Verfahren nach Anspruch 1, worin die gelatinierten Vollkörner aus Schritt (b) zerhackt oder auf andere Weise zerkleinert werden, um einen Teig zu bilden, der zu geformten Teigstücken geformt wird.

8. Verfahren nach Anspruch 1, worin das Produkt aus Schritt (d) im wesentlichen Vollkörner umfasst.

9. Verfahren nach Anspruch 1, worin das Material aus Schritt (b) zu einem Feuchtegehalt von 9% (Gew/Gew) bis 15% (Gew/Gew) getrocknet wird.

10. Verfahren nach Anspruch 1, worin das Material aus Schritt (d) in schnell bewegter Luft durch Mikrowellenenergie, Infrarotstrahlung oder Braten erhitzt wird.

11. Verfahren nach Anspruch 1, worin das Nahrungsprodukt ein poröses expandiertes Produkt ist.

12. Verfahren nach Anspruch 1, worin die Vollkörner ausgewählt sind aus Mais, Gerste, Hirse, Roggen, Weizen und Reis.

13. Verfahren nach Anspruch 1, worin eine Mischung aus Vollkörnern verwendet wird.

14. Getreidevollkorn-Nahrungsmittel, hergestellt durch ein Verfahren, das
(a) das Kochen von Vollkörnern mit 20% (Gew/Gew) bis 100% (Gew/Gew) wachsartiger Körner in Gegenwart von Feuchtigkeit zum Gelatinieren der Körner,
(b) das Formen der gelatinierten Körner zu einem Teig einer Größe, einer Form und eines Gewichts, geeignet zur Verwendung als Nahrungsmittel,
(c) die Trocknung des Materials auf einen Wassergehalt von 4% (Gew/Gew) bis 25% (Gew/Gew), und
(d) die schnelle Ausdehnung des Produkts durch Anwendung von Hitze
umfasst.

15. Produkt nach Anspruch 14, worin die Vollkörner als einzelne Körner in ganzer Form gekocht werden.

16. Produkt nach Anspruch 14, worin die Vollkörner vor dem Kochen unterteilt werden.

17. Produkt nach Anspruch 14, worin die Vollkörner in Gegenwart eines oder mehrerer essbarer Zucker, Salze, Mineralien, Nahrungsergänzungsmittel, Aromastoffe und Garnierungen gekocht werden.

18. Produkt nach Anspruch 14, worin das Kochen aus Schritt (a) und die Teigformung aus Schritt (b) zu einem einzigen integrierten Schritt kombiniert werden.

19. Produkt nach Anspruch 18, worin die Vollkörner in einem Extrusionskocher gekocht werden.

20. Produkt nach Anspruch 14, worin die gelatinierten Vollkörner aus Schritt (b) zerhackt oder auf andere Weise zerkleinert werden, um einen Teig zu bilden, der zu geformten Teigstücken geformt wird.

21. Produkt nach Anspruch 14, worin das Produkt aus Schritt (d) im wesentlichen Vollkörner umfasst.

22. Produkt nach Anspruch 14, worin das Material aus Schritt (b) zu einem Feuchtegehalt von 9% (Gew/Gew) bis 15% (Gew/Gew) getrocknet wird.

23. Produkt nach Anspruch 14, worin das Material aus Schritt (d) in schnell bewegter Luft durch Mikrowellenenergie, Infrarotstrahlung oder Braten erhitzt wird.

24. Produkt nach Anspruch 14, worin das Nahrungsprodukt ein poröses expandiertes Produkt ist.

25. Produkt nach Anspruch 14, worin die Vollkörner aus gewählt sind aus Mais, Gerste, Hirse, Roggen, Weizen und Reis.

26. Produkt nach Anspruch 14, worin eine Mischung aus aus Vollkörnern verwendet wird.

## Revendications

1. Procédé d'élaboration d'un produit alimentaire à base de grains de céréale complète, comprenant les étapes consistant à :
(a) cuire un ou plusieurs grain(s) différent(s) de céréale complète renfermant de 20 % (en poids) à 100 % (en poids) de grains cireux, en présence d'humidité, de manière à gélatinifier les grains ;
(b) donner, aux grains gélatinifiés, la forme d'une pâte d'une dimension, d'une configuration et d'un poids compatibles avec une utilisation en tant que produit alimentaire ;
(c) sécher la matière jusqu'à une teneur en eau comprise entre 4 % (en poids) et 25 % (en poids) ; et
(d) soumettre le produit à expansion rapide, par application de chaleur.

2. Procédé selon la revendication 1, dans lequel les grains de céréale complète sont cuits en tant que grains individuels, sous une forme compacte.

3. Procédé selon la revendication 1, dans lequel les grains de céréale complète sont scindés préalablement à la cuisson.

4. Procédé selon la revendication 1, dans lequel les grains de céréale complète sont cuits en présence d'un ou plusieurs sucre(s) comestible(s), sel(s), minéral (minéraux), adjuvant(s) nutritionnel(s), substance(s) aromatique(s) et substance(s) de charge.

5. Procédé selon la revendication 1, dans lequel la cuisson de l'étape (a) et la formation d'une pâte, de l'étape (b), sont regroupées en une seule et unique étape combinée.

6. Procédé selon la revendication 5, dans lequel les grains de céréale complète sont cuits dans un cuiseur par extrusion.

7. Procédé selon la revendication 1, dans lequel les grains gélatinifiés de céréale complète, de l'étape (b), sont morcelés ou broyés d'une autre manière, pour former une pâte qui est débitée en des fragments profilés.

8. Procédé selon la revendication 1, dans lequel le produit de l'étape (d) renferme, en substance, des grains de céréale complète.

9. Procédé selon la revendication 1, dans lequel la matière de l'étape (b) est séchée jusqu'à une teneur en humidité comprise entre 9 % (en poids) et 15 % (en poids).

10. Procédé selon la revendication 1, dans lequel la matière de l'étape (d) est chauffée dans de l'air en circulation rapide, par de l'énergie de micro-ondes, par un rayonnement infrarouge ou par friture.

11. Procédé selon la revendication 1, dans lequel le produit alimentaire est un produit poreux venu d'expansion.

12. Procédé selon la revendication 1, dans lequel les grains de céréale complète sont choisis au sein du groupe comprenant du maïs, de l'orge, du sorgho, du seigle, du froment et du riz.

13. Procédé selon la revendication 1, dans lequel on utilise un mélange de grains de céréales complètes.

14. Produit alimentaire à base de grains de céréale complète obtenu par un procédé comprenant les étapes consistant à :
(a) cuire des grains de céréale complète renfermant de 20 % (en poids) à 100 % (en poids) de grains cireux, en présence d'humidité, de manière à gélatinifier les grains ;
(b) donner, aux grains gélatinifiés, la forme d'une pâte d'une dimension, d'une configuration et d'un poids compatibles avec une utilisation en tant que produit alimentaire ;
(c) sécher la matière, d'une teneur en eau de 4 % (en poids) à 25 % (en poids) ; et
(d) soumettre le produit à expansion rapide, par application de chaleur.

15. Produit selon la revendication 14, dans lequel les grains de céréale complète sont cuits en tant que grains individuels, sous une forme compacte.

16. Produit selon la revendication 14, dans lequel les grains de céréale complète sont scindés préalablement à la cuisson.

17. Produit selon la revendication 14, dans lequel les grains de céréale complète sont cuits en présence d'un ou plusieurs sucre(s) comestible(s), sel(s), minéral (minéraux), adjuvant(s) nutritionnel(s), substance(s) aromatique(s) et substance(s) de charge.

18. Produit selon la revendication 14, dans lequel la cuisson de l'étape (a) et la formation d'une pâte, de l'étape (b), sont regroupées en une seule et unique étape combinée.

19. Produit selon la revendication 18, dans lequel les grains de céréale complète sont cuits dans un cuiseur par extrusion.

20. Produit selon la revendication 14, dans lequel les grains gélatinifiés de céréale complète, de l'étape (b), sont morcelés ou broyés d'une autre manière, pour former une pâte qui est débitée en des fragments profilés.

21. Produit selon la revendication 14, dans lequel le produit de l'étape (d) renferme, en substance, des grains de céréale complète.

22. Produit selon la revendication 14, dans lequel la matière de l'étape (b) est séchée jusqu'à une teneur en humidité comprise entre 9 % (en poids) et 15 % (en poids).

23. Produit selon la revendication 15, dans lequel la matière de l'étape (d) est chauffée dans de l'air en circulation rapide, par de l'énergie de micro-ondes, par un rayonnement infrarouge ou par friture.

24. Produit selon la revendication 14, dans lequel ledit produit alimentaire est un produit poreux venu d'expansion.

25. Produit selon la revendication 14, dans lequel les grains de céréale complète sont choisis au sein du groupe comprenant du maïs, de l'orge, du sorgho, du seigle, du froment et du riz.

26. Produit selon la revendication 14, dans lequel on utilise un mélange de grains de céréales complètes.
